Europäisches Patentamt

European Patent Office

Office européen des brevets

(11) Publication number: **0 264 771**
**A2**

# EUROPEAN PATENT APPLICATION

(21) Application number: 87114900.1

(51) Int. Cl.4: **D04H 1/58**

(22) Date of filing: 13.10.87

(30) Priority: 14.10.86 US 918439

(43) Date of publication of application:
27.04.88 Bulletin 88/17

(84) Designated Contracting States:
AT BE CH DE ES FR GB GR IT LI LU NL SE

(71) Applicant: **AMERICAN CYANAMID COMPANY**
**1937 West Main Street P.O. Box 60**
**Stamford Connecticut 06904-0060(US)**

(72) Inventor: **Hall, Dale Edward**
**16408 Equestrian Lane**
**Rockville Maryland 20855(US)**
Inventor: **Lipka, Stephen Mark**
**27 Wilridge Road**
**Ridgefield Connecticut 06877(US)**

(74) Representative: **Wächtershäuser, Günter, Dr.**
**Tal 29**
**D-8000 München 2(DE)**

(54) **Non-sintered metallic overcoated non-woven fiber mats.**

(57) A non-woven fiber mat is disclosed. The mat comprises a multiplicity of electrocoatable fibers, a fibrillated binder and a metallic overcoat.

Also disclosed is a method of producing a non-woven fiber mat and a method for overplating a uniformly thin metallic overcoat onto a non-woven fiber mat.

EP 0 264 771 A2

## NON-SINTERED METALLIC OVERCOATED NON-WOVEN FIBER MATS

FIELD

This invention relates to non-woven fiber mats having a metallic overcoat. The mats are strengthenend and made more electrically conductive by bonding adjacent fibers together by means other than sintering.

BACKGROUND

There is present interest by those skilled in the art in non-woven fibrous mats for a variety of ultimate end uses, such as, battery electrodes. It is highly desirable to have non-woven fiber mats whose structure provides high porosity, low density, high aspect ration, uniform small pores and high material strength. It is also desirable to avoid the expensive sintering process in the manufacture of such mats.

U.S. 4,169,911 (Yoshida et el., issued October 2, 1979) discloses a porous material made up of a plurality of cut carbon fibers having a diameter of 3 to 20 microns. The fibers are substantially complete and randomly dispersed and accumulated with individual fibers intersecting each other. A binder unites each of the fibers with other fibers at their points of intersection to form a porous structure having a multiplicity of pores which extend continuously from one surface of the material to the other. A thin metal film covers each of the fibers with the metal film being applied after the material is made. The carbon fibers have short lengths, preferably 2 to 50 mm, and are preferably cut carbon fibers; they are preferably layered over one another to provide a plate or a mat. The binder that is utilized is a resin binder and preferably comprises 2 to 50 weight percent (based upon the total weight of the cut carbon fibers).

The porous material disclosed in U.S. 4,169,911 has several disadvantages, which, if overcome, would result in a highly desirable structure. The material allows for a binder in amounts up to 50 weight percent of the cut carbon fibers. This large amount of binder, which provides structural integrity, adds weight to the ultimate structure produced. The binders that are used are resin binders. Such a binder, completely encompassing the intersection of the carbon fibers, as shown in the drawing in U.S. 4,169,911, would thereby provide an insulating layer against electrical conductance at that location. Further, it is believed, that due to the nature of resin binders, the binder is present in or on other locations within the porous material, such as along the lengths of the carbon fibers with extension and invasion into the pore spaces, and thus the binder is not solely confined to the intersecting points of the carbon fibers. The consequence of these invasive, extensive and insulating binder properties is the need for a relatively heavier and thicker metal overcoat. This heavier overcoat would be required to overcoat the binder areas completely in order to provide good electrical conductance. The net effect is a heavier and denser material for a given unit area.

A welcome contribution to the art would be a porous material, e.g., a non-woven fiber mat, having a high porosity, low density, high material strength, superior electrical conductivity and a thin metallic overcoat. The contribution would further be welcome if the porous material could be produced without the use of sintering and resinous binders. Such a contribution is provided by this invention.

SUMMARY OF THE INVENTION

This invention provides a non-woven fiber mat com prising a plurality of electrocoatable fibers, a fibrillated binder and a metallic overcoat. The electrocoatable fibers and binder are laid down in the form of a mat or plate, forming a porous structure capable of receiving a thin metallic overcoat having material strength, and a multiplicity of pores which extend continuously from one surface of the structure to the other.

More specifically this invention provides a non-woven fiber mat having a multiplicity of pores which extend continuously from one surface of said mat to the other surface comprising:

(A) A multiplicity of electrocoatable fibers overlaid and intersecting substantially within the same two dimensional plane;

(B) A fibrillated fiber binder in a structurally supportive amount dispersed within said mat wherein said binder fibrils contact said electrocoatable fibers, preferably the majority of said fibrils contact said electrocoatable fibers substantially in dimensional planes angular to said two dimensional plane; and

(C) A substantially uniform metallic overcoat covering said electrocoatable fibers and at least partiall incorporating within said overcoat said binder at the sites where said binder contacts said electrocoatable fibers.

This invention also provides a method of producing a non-woven fiber mat comprising:

(I) intimately admixing said electrocoatable fibers of (A) and said fibrillated binder of (B) with a suspending liquid and flocculating agent until a substantially uniform well dispersed mixture is obtained;

(II) adding said mixture of (I) to a suitable container having a support structure and outlets for controlled removal of said suspending liquid. said container having added thereto a minor amount of said suspending liquid before the addition of said mixture of (I);

(III) adding additional suspending liquid whereby substantially all the volume of said container has been filled;

(IV) stirring the mixture in said container;

(V) allowing said mixture of (IV) to settle;

(VI) removing a substantial amount of said suspending liquid whereby a minor amount of suspending liquid remains above the formed mat sufficient to allow the addition of at least one sheet of absorbing and/or porous material to be placed in the remaining suspending liquid without adversely disturbing the formed mat;

(VII) adding at least one sheet of absorbing and/or porous material to said remaining suspending liquid;

(VIII) removing said remaining suspending liquid thereby causing said absorbing and/or porous material to make contact with the surface of said mat;

(IX) removing said mat from said container;

(X) placing said mat in a drum dryer, optionally between two sheets of absorbing and/or porous material;

(XI) optionally, repeating (X) wherein the absorbing and/or porous material is changed;

(XII) optionally, drying said mat in a convection oven;

(XIII) optionally, treating said mat with a wetting solution;

(XIV) placing said mat in an electrolyte solution, optionally having a wetting solution added thereto, at the cathode position substantially symmetrically between two anodes comprising the metal to be deposited or two insoluble anodes;

(XV) applying a current; and

(XVI) providing bulk electrolyte solution to both sides of said mat.

This invention further provides a method for overplating (overcoating) a uniformly thin metallic coat onto a non-woven fiber mat (mat). The method comprising, optionally treating the mat with a wetting solution, using the mat as a cathode with the cathode being placed substantially symmetrically between two anodes in an electrolyte solution, with the electrolyte solution optionally having a wetting solution added thereto, applying a current sufficient to cause the metal to be electrodeposited on the mat, and providing an electrolyte solution flow sufficient to maintain a high ratio of metal ions entering the porous mat to metal ions being deposited on the mat such that there is a substantially uniform distribution of metal ions to the mat and available for deposition. The electrolyte solution having the desired metal ion concentration (bulk electrolyte solution) can be provided periodically, such as by jet spraying freshly loaded solution, or continuously, such as by flowing the electrolyte solution continuously through the mat with the direction of flow optionally being reversed in a cyclic manner and preferably for an equal number of times in each direction. The application of current is continued until the desired quantity of metal is overcoated on the mat. The anodes comprise the metal to be deposited, that is the anodes can be the metal to be deposited or the anodes can contain or hold the metal to be deposited. Also, insoluble anodes can be utilized. In general, the electrolyte solution flows through the mat in a direction which is substantially perpendicular to the largest surface of the mat, and when used, the change in the direction of flow is substantially 180° with each reversal.

The term "electrocoatable fibers" as used herein means any fiber which is capable of receiving a metallic overcoat by either an electrodeposition process or an electroless chemical deposition process.

The term "substantially within a two dimensional plane" as used ehrein means that the fibers are laid down in a plane, or several parallel planes, to form a mat-like or plate-like shape. In other words the angle between the axis of the electrocoatable fibers and the two dimensional plane is less than about 15 degrees and preferably less than about 5 degrees.

The term "angular" as used herein means that a sub stantial amount of the fibrillated binder contacts the electrocoatable fibers at an angle to their axis (i.e., the axis of the electrocoatable fibers) with a substantial amount of the binder being in the direction of thickness of the mat.

3

The mats have utility as battery electrodes. Other contemplated uses include but are not limited to filters, catalyst supports, fuel cell electrodes, heat sinks, heating elements, electrodes for chemical production, electrodes for wastewater treatment, and the like.

DETAILED DESCRIPTION OF THE INVENTION

The electrocoatable fibers and the binders are laid down in a manner and a direction so as to form a porous structure having material strength. The final configuration that the electrocoatable fibers are laid down to form the mat may be dependent on the end use to which the mat is put. Thus, for example, it is contemplated that the electrocoatable fibers can be laid down parallel to each other, with spacing between the fibers, in one layer with the overlaid layer parallel to the preceding layer but with the axis of the fibers at an angle to the axis of the fibers of the preceding layer. However, in general the electrocoatable fibers are randomly overlaid and randomly intersect each other substantially in a two dimensional plane or in layers parallel to the two dimensional plane.

The electrocoatable fibers utilizable in the mats of this invention are selected from the group consisting of (a) metal coated electrically conductive fibers; (b) electrically conductive fibers; (c) metal coated non-conductive fibers; and (d) mixtures thereof. Electrically conductive fibers means fibers whose conductivity is inherently high enough to be electroplated. Non-conductive fibers means fibers whose conductivity is not inherently high enough to be electroplated but with a pretreatment the fibers can be rendered sufficiently conductive, at least along their surface, to allow the fibers to be electroplated.

The electrically conductive fibers of (a) and (b) include, for example, semi-metallic fibers such as carbon fibers, graphite fibers, activated carbon fibers, pitch-based graphite fibers, intercalated graphite fibers, mixtures thereof and the like; boron fibers, silicon carbide fibers, and mixtures thereof; and mixtures thereof. Carbon fibers is intended to include any of the fibers that are made by carbonizing organic fibers such as cellulose fibers, acrylic synthetic fibers, polyvinyl alcohol synthetic fibers, and the like. The materials that can be intercalated with the graphite fibers include, for example $CuCl_2$, $Br_2$, $LiF$, $AlF_3$, $MgF_2$, $AlCl_3$, $FeCl_3$, $NiCl_3$, and the like. Preferably polyacrylonitrile-based carbon or graphite fibers are used as the electrically conductive fibers because of their relatively low cost, small fiber diameter, good physical and structural characteristics, and commerical availability.

The non-conductive fibers of (c) include any of the organic fibers naturally occurring or synthetic which do not normally conduct an electric current, but by appropriate treatment can be made to conduct an electric current at least along the surface of the fiber. This is done so that the non-conductive fiber can be metal coated to produce the metal coated non-conductive fibers. Therefore, non-conductive fibers include, but are not limited to, polyesters, polyolefins, synthetic acrylic polymers, polyamides, and copolymers thereof, glass fibers, ceramic fibers and mixtures thereof. The fibers can be made electrically conductive by processes known to those skilled in the art, see for example, U.S 4,364,739 (issued December 21, 1982) which discloses the preparation of electrically conducting acrylic and modacrylic fibers. In U.S. 4,364,739 the fibers are subjected to a first heat-treatment in a bath containing a copper compound and a reducing agent to absorb monovalent copper ions within the fibers. The heat-treated fibers are washed thoroughly and then subjected to a second heat-treatment in the presence of a sulfur-containing compound to convert the adsorbed monovalent copper ions to copper sulfide. Yet another process is described in pending U.S. Application Serial No. 507,439, filed June 24, 1983, the disclosure of which is incorporated herein by reference.

The metals which can be used as the metal coating on the electrically conductive fibers of (a), the non-conductive fibers of (c), and as the metallic overcoat placed on the fiber mat include nickel, iron, cobalt, platinum, gold, silver, copper, palladium, rhodium, rhenium, lithium, aluminum, lead, zinc, tin, chromium, molybdenum, cadmium, indium, manganese, tellurium, antimony, selenium, ruthenium, gemanium, silicon, and alloys composed of at least one of said metals as a main component. The following metals, because of economics and present industry interests, are preferred: nickel, iron, cobalt, platinum, gold, silver, copper, palladium, aluminum, lead, zinc, tin chromium, cadmium, ruthenium, and alloys comprising at least one metal thereof as a main component. Most preferably nickel is used in consideration of the present industry interests in nickel/cadmium batteries. On electrodepositable metals, see for example, Brooman, E.W., Plating and Surface Finishing, May 1985, Vol. 72, No. 5, pages 142-148; and Lowenheim, F.A. (editor), Modern Electroplating, 3rd edition, Wiley-Interscience, 1974.

The metal coated electrically conductive fibers utilizable in this invention are those that are generally available commercially. They are fibers that have at least one thin, uniform, firmly adherent, electrically conductive layer of at least one of the aforementioned metals. These fibers can also be prepared in accordance with the process disclosed in pending U.S. Application Serial No. 507,440, filed June 24, 1983, the disclosure of which is incorporated herein by reference.

The electrocoatable fibers have lengths and diameters of sufficient size to produce a mat suitable for its intended purpose and use. In general, for battery electrodes the electrocoatable fibers are of a size that results in a substantially uniform distribution of the fibers in the non-woven mat. By "substantially uniform distribution" it is meant that there is no or relatively little (e.g., less than about 5 weight percent base on the total mat weight) clumping of fibers into bundles, or if there is clumping of fibers into bundles the percentage of bundles present per unit area will not adversely interfere with the metallic overcoating or electric conductance of the mat.

The electrocoatable fibers used herein can have lengths up to about 7 mm with up to about 6.4 mm being suitable. Generally, lengths of about 0.5 mm to about 7 mm are suitable with about 0.8 mm to about 6.4 mm being more convenient. Preferably, for use as battery electrodes the electrocoatable fibers have lengths within the range of about 2.0 mm to about 4.0 mm with about 2.5 mm to about 3.5 mm being most preferred.

The electrocoatable fibers have diameters generally within the range of about 3 to about 15 microns (exclusive of any metal coat which can be present) preferably about 4 to about 12 microns and most preferably from about 4 to about 8 microns.

Usually the metal coated fibers of (a) and (c) have a metal coating that is not more than about one micron thick with about 0.1 to about 0.5 microns thick being preferred.

The fibrillated binder is derived from any fibers which are capable of being fibrillated or any particles which are capable of being fibrillated. Fibrillated fibers utilizable in this invention are described in Application Serial No. (Case 30,351), filed (concurrently herewith), the disclosure of which is incorporated herein by reference. Thus, for example, the binder may comprise acrylic fibers, polyfluorocarbon fibers or small particles (such as polytetrafluoroethylene, see for example, Hall, D.E. and Shepard, Jr., V.R., "$AB_5$ - Catalyzed Hydrogen Evolution Cathodes," Int. J. Hydrogen Energy, Vol. 9, No. 12, pages 1005-1009, 1984), and the like. Suitably, the binders are fabrillated acrylic fibers as described in the aforementioned Application Serial No. (Case 30,351). A preferred fiber is a copolymer of acrylonitrile and methyl methacrylate wherein there is at least about 89% by weight acrylonitrile and up to about 11% by weight of methyl methacrylate, such as American Cyanamid Acrylic Fiber T-98 comprising about 90% by weight acrylonitrile and about 10% by weight methyl methacrylate.

Usually, any fiber or particle which can be fibrillated to a diameter of about 5 microns or less, i.e., having a diameter of up to about 5 microns can be used. Conveniently, the fibrillated binder (fibrils) have diameters up to about 2.5 microns, preferably the fibrils have diameters within the range of about 0.5 to about 2.5 microns and most preferably the diameters are less than or equal to about 2 microns.

Generally, the lengths of the fibrils used are sufficient to make contact with and therefore bind the electrocoatable fibers together and provide the desired material strength needed for maintaining the integrity of the mat for metallic overplating as well as contributing to the desired material strength needed for the ultimate end use of the mat. Generally, the fibrils contact the electrocoatable fibers by twisting or wrapping around them. These fibrils are substantially oriented in the direction of thickness of the mat.

The electrocoatable fibers and the fibrillated binder are used in amounts that will provide a porous structure having sufficient material strength to maintain structural integrity during overcoating. The electrocoatable fibers are also used in sufficient amounts to provide a structure of suitable size and porosity that is required for the intended use of the mat. Thus, for example, for a battery electrode a suitable amount of electrocoatable fibers are used to provide a fiber mat which can be overcoated to provide the desired electrical conductivity. In a similar manner, a suitable amount of the fibrillated binder is utilized to provide the required material strength. In general, the electrocoatable fibers are present in the amount of about 80 to about 98 weight percent and the binder is present in an amount of about 2 to about 20 weight percent, with the weight percents being based on the total weight of the electrocoatable fibers and the binder. More preferably, the electrocoatable fibers are present in an amount of about 88 to about 96 weight percent and the binder is present in an amount of about 4 to about 12 weight percent. When the intended use of the non-woven fiber mat is as a battery electrode, the preferred amounts for nickel coated graphite mats is about 6 weight percent binder and about 94 weight percent nickel coated graphite fibers; the preferred amounts for carbon fiber mats is about 10 weight percent binder and about 90 weight percent carbon fiber (no metal coat). Without wishing to be bound by theory, it is believed that the preferred amounts of binder are related to the density of the electrocoatable fibers utilized.

The fiber mats are overcoated with a uniform metallic overcoat. For use as battery electrodes it is preferable to provide only a uniformly thin metallic overcoat of sufficient thickness to provide the desired electrical conductance in the mat. Those skilled in the art can appreciate that for other applications thicker metallic overcoats may be suitable, such as applications requiring greater material strength than that normally needed for battery electrodes. In general, the thickness of the metallic overcoat placed on the electrocoatable fibers is up to about 3 microns thick. For use as a battery electrode, the thickness of the metallic overcoat is generally up to about 2.5 microns thick and preferably no more than up to about 1.5 microns thick. More conveniently, the thickness of the metallic overcoat will fall within the range of about 0.1 to about one micron.

When the mats are overplated, the fibril binder is at least partially incorporated into the metallic overcoat. This means that the metallic overcoat overgrows all or part of the edges of the fibril binder at its contact point with the electrocoatable fiber.

It has previously been stated that the non-woven fiber mats are a porous structure having a multiplicity of pores which extend continuously from one surface of the mat to the other surface. The mats of this invention generally have a porosity which is greater than 85 percent (based upon mercury porosimetry measurements) with about 88 percent to about 96 percent being preferred and about 90 percent to about 96 percent being more preferred. In general, the non-woven fiber mats of this invention have pore sizes within the range of about 40 microns to about 50 microns. Those skilled in the art can appreciate that the pore size obtained in a non-woven fiber mat is to some degree related to the process by which the mat is produced. Therefore, different processes may produce mats of varying pore sizes.

Since sintering is not utilized to strengthen the mat, the binder is present in the resulting product because high temperatures which would have destroyed the binder are not used. The at least partial incorporation of the binder into the metallic overcoat at the sites where the binder contacts the electrocoatable fibers provides additional material strength to the fiber mats of this invention.

Surprisingly it has been discovered that the metallic overcoated mats produced from metal coated fibers, e.g. nickel coated graphite, have unexpected increases in electrical conductivity. For example, it has been found that the nickel overplated mat comprising nickel coated graphite fibers has an electrical conductivity more than 15 times that of the non-overcoated mat, when, based upon the amount of nickel overcoated, one skilled in the art would expect about a two fold increase in electrical conductivity compared to the as-cast non-overcoated mat.

The mats of this invention can be produced by wet paper making process. Wet paper making processes are well known to those skilled in the art (e.g., see Kirk-Othmer, Encyclopedia of Chemical Technology , 2nd Edition, Interscience Publishers, a division of John Wiley & Sons, Inc., Vol. 14, Pages 503-509). In a batch or continuous process, for example, the electrocoatable fibers, the fibrillated binder, a suspending liquid, such as water and preferably deionized water, and a flocculant (known in the art for use in a wet paper making process) are blended together for a suitable amount of time that will result in a well blended uniform mixture. The mixture is then added to a suitable device which allows for the settling of the fiber mixture onto a supportive structure and allows for the removal of the suspending liquid that is utilized. Once the suspending liquid has been removed, the resulting mat can be removed from the supporting structure and dried.

More particularly, the fiber mats to be overplated can be produced by intimately admixing the electrocoatable fibers, the fibrillated binder, a suspending liquid (preferably water and most preferably deionized water) and a flocculating agent together until a substantially uniform well dispersed mixture is obtained. The mixture is poured into a container that is suitably designed for use in the wet paper making process. Such containers are well known to those skilled in the art, such as the headbox of a Noble and Wood Sheet Making Machine, and provide a support structure (e.g., wire mesh) for the mat and outlets for the controlled removal of the suspending liquid. Some suspending liquid (a minor amount in comparison to the total volume capacity of the container) is added to the container prior to the addition of the mixture so that the mixture is not added to a dry container. The mixture is poured into the container. Then additional suspending liquid is added. This mixture is then stirred, for example, with a perforated brass plunger, and then the mixture is allowed to settle, preferably the mixture is allowed to gravity settle. After settling, most of the suspending liquid is removed (e.g., evacuated by application of vacuum, pumping, drawing or siphoning) to a level above the formed mat. Enough suspending liquid remains above the mat so that at least one sheet of absorbing and/or porous material (e.g., blotter paper; finely woven open mesh synthetic screens, such as nylon, polypropylene screens, and the like) can be placed into the suspending liquid without adversely affecting the formed mat (such as by disturbing or disrupting the now settled fibers of the mat). The remaining liquid is then removed (such as by evacuation, as stated above). The removal of the remaining suspending liquid causes the absorbing and/or porour material to make contact with the surface of the mat. Without wishing to be bound by theory, it is believed that the presence of the absorbing and/or porous material in contact with the surface of the mat results in a smoothing of the mat surface, i.e., any anomalies such as fiber clumps and wrinkles are eliminated. When absorbing material is utilized, it is convenient to allow the material to become saturated with the remaining suspending liquid prior to the removal of the remaining suspending liquid. The mat is then removed from the container and placed in a drum dryer, optionally between sheets of absorbing and/or porous material, such as a steam heated drum dryer set for a temperature that will dry the mat within a reasonable amount of time without adversely affecting the mat (e.g., without causing undue degradation). For example a steam heated drum dryer set at about 210°F to about 214°F (99°C to 101.°C) can be used. Optionally, when absorbing and/or porous material is used in the drying setp, the mat can be dried stepwise whereby after a sufficient amount of drying time, the mat is removed from the drum dryer, the sheet of absorbing and/or porous material are changed, and the mat is once again placed in the drum dryer for drying. This sequence can be followed until the mat is dry. If desired and if additional drying is preferable, the mat can then be placed in a conventional oven for further drying to remove any residual water. The temperature of the convection oven can be any suitable temperature which will dry the mat in a reasonable amount of time without adversely affecting the mat. Conveniently, a temperature of about 70°C for a time period of about one hour can be used. The wet paper making process for the production of the mats of this invention will be better understood by reference to the illustrative examples given hereinafter.

The mats of this invention can be overplated using any suitable container which can contain an electrolyte solution, the anodes and cathodes in the appropriate sequence, and a means for providing bulk electrolyte solution --i.e., solution containing an optimum range or amount of metal ions to be deposited in the mat --substantially uniformly to all areas of the mat. A non-limiting example of such a container is a flow-through-cell. The anodes comprise the metal to be deposited, that is the anodes can be the metal to be deposited or the anodes can contain or hold the metal to be deposited. Also, insoluble anodes can be utilized. The mat is placed at and generally functions as the cathode. The cathode is placed substantially symmetrically between two anodes. Without wishing to be bound by theory, it is believed that placing the cathode symmetrically between the two anodes results in a uniform plating of metal on both sides of the mat. The anode-cathode-anode configuration can be suitably designed for a batch or a continuous process. Thus, for example, in a batch process, the container can have more than one sequence of anode-cathode-anode repeating one after the other. In a continuous process, for example, the mat (cathode) can be drawn substantially symmetrically through a sequence of anodes placed on each side of the cathode with the sequential arrangement of the anodes being in the direction of movement of the cathode. Bulk electrolyte solution is delivered uniformly to both sides of the mat. This can be accomplished by a continuous or discontinuous (periodic) flow, for example, by jet spraying the electrolyte solution on both sides of the mat or by periodically (cyclically) reversing the direction of flow of the electrolyte, preferably the flow reversals are for an equal number of times in each direction. A continuous flow of electrolyte solution through the mat, without flow reversal, can also be utilized provided that the flow rate is sufficient to supply bulk electrolyte solution substantially uniformly to all areas of the mat without damaging the mat.

Generally, the mat can be treated with a wetting solution prior to being placed in the electrolyte solution, and/or a wetting solution can be added to the electrolyte solution. Wetting solutions are known to those skilled in the art and can vary depending on the metal to de deposited. For example, for overplating nickel a wetting solution of sodium lauryl sulfate is utilized. Those skilled in the art can appreciate that in theory (and without wishing to be limited thereby) the wetting agent utilized allows the electrolyte to displace trapped air in the pores of the mat and, if produced by the metal plating process and conditions utilized, allows evolved hydrogen gas to be easily displaced from the pores of the mat.

Preferably the anodes are of a configuration such that the electrolyte solution can flow through the anodes. Thus for example, nickel in the form of a mesh or strips with holes placed in the strip are utilized. The mat is at, and functions as, the cathode and can be of any suitable shape for overplating. Conveniently, the mat has square, rectangular or circular geometry. The electrolyte solution is any of those known to those skilled in the art for electrodepositing the particular metal being utilized (see, for example, Metal Finishing Guidebook and Directory, 54th edition, Metals and Plastics Publications Inc., Hackensack, New Jersey, 1986). Thus, for example, an electrolyte solution comprising 225 to 375 g/L of $NiSO_4 \bullet 6H_2O$, plus 30 to 60 g/L of $NiCl_2 \bullet 6H_2O$, plus 30 to 60 g/L of $H_3BO_3$, plus a pH of 1.5 to 4.5, and plus optional additives in amounts known to be useful by those skilled in the art is used for electrodepositing nickel.

The flow rate of the electrolyte, the current density and, when utlized, the number of directional flow reversals per unit time are suitably chosen for the metal being used, the size of the mat being overplated, and the size of the container, e.g., flow-through-cell, utilized such that a uniform thin metallic overcoat is deposited throughout the mat. In general, the flow rate and current density is adjusted so that the number of metal ions (e.g., nickel) entering the pores of the fiber mat from the electrolye solution (metal ions entering) is greater than the number of metal ions being deposited (metal ions deposited) on the mat at the cathode.

Conveniently, the flow rate of the metal ions is such that the ratio of metal ions entering to metal ions deposited is greater than about 2 and preferably greater than about 10. However, those skilled in the art can appreciate that the flow rate can vary with the size of the mat, the concentration of the electrolyte solution and the rate at which the metal is plated out. Conveniently, the rate has an upper limit at which the pressure exerted on the mat would adversely affect the mat, and a lower limit at which the rate is no longer able to prevent preferential plating on exterior surfaces of the mat. The preferential plating then exhausts the electrolyte resulting in no or a diminished amount of metal available to the interior of the mat.

Those skilled in the art will appreciate that the optimum current density utilized can vary for different metals (and therefore different electrolyte solutions) utilized and for different processing methods utilized. Generally, from the known actual surface area of the fibers to be plated and the known and established current density ranges for the plating bath (electrolyte solution being utilized) the optimum current density for the metal being plated can be determined without undue experimentation.

Thus, for example, for overplating nickel on mats comprising nickel coated fibers the current density is generally at least about 2 mA/cm² and conveniently within the range of about 2 mA/cm² to about 150 mA/cm², preferably about 10 mA/cm² to about 100 mA/cm² and most preferably about 25 mA/cm² to about 80 mA/cm², with the current density being based on the total calculated surface area of the electrocoatable fibers in the mat (i.e., the known actual surface area of the fibers to be plated). Those skilled in the art will appreciate that any practical upper limit of the current density is determined by establishment of increased rate of hydrogen evolution and/or by metal deposits with unacceptable characteristics, such as rough or non-adherent metal overcoats. For example, an electrolyte solution comprising 90 g/L of nickel ions, plated at a current density of 5 mA/cm² and a flow rate of 28 ml/min. was found to be satisfactory.

The number of electrolyte directional flow reversals (times/min.) in a plating cycle is suitably selected so that the metal ions evenly plate out on the mat, that is, the ions are prevented from preferentially plating out in one direction. Therefore, the flow direction reversals, without wishing to be bound by theory, prevent any electrolyte trails developing through the mat, which, if present, would result in a lower concentration of metal ions flowing through and plating out at a particular area of the mat. Conveniently, the reversals/unit time are within the range of about once per minute to bout 10 times/min. The overplating process will be better understood by reference to the illustrated examples hereinafter.

The following examples are provided for the purposes of illustration only. The examples should not be construed as limiting the invention in any way as variations of the invention are possible which do not depart from the spirit and scope of the appended claims.

## EXAMPLE 1

### Preparation of Non-Woven Fiber Mats Utilizing the Wet Paper Making Process

CYCOM® MCG brand of nickel coated graphite fibers, having a 50 weight percent nickel coating (approximately 0.33 microns nominal coating thickness) average lengths of 1/4" (6.4 mm) and 1/8" (3.2 mm), obtained from American Cyanamid Company, were used to prepare non-woven fiber mats. The chopped nickel-coated graphite fiber was mixed with fibrillated acrylic fiber which served as the binder material. The mixture contained 94 weight percent nickel-coated graphite fiber and 6 weight percent acrylic fiber binder.

Acrylic fiber pulp for use as the binder was prepared by starting with 3/8 inch (9.5 mm) long, chopped American Cyanamid Acrylic Fiber T-98 comprising about 89% by weight acrylonitrile and about 11% by weight methyl methacrylate. A standard mixture of fibrillated acrylic pulp was prepared by adding about 50 g of the wet acrylic fiber containing about 50% water and 2 ml of 0.0001 g/ml AEROSOL® OT-75 brand of dispersant (American Cyanamid Company) to 3 liters of deionized water and blending for about 75 minutes in an industrial Waring Blender. The blender was fitted with rounded blades so that the fiber could be mechanically beaten and fibrillated rather than cut.

One square foot (929 cm²) samples of the nickel coated graphite fiber/acrylic fiber binder mats were prepared on the Noble and Wood 12 inch (30 cm) sheet machine using the wet paper making process. The nominal thickness of the mat were approximately 0.025 inches (0.064 cm).

Two different formulations (see Table 1) and methods were used in preparing 0.064 cm thick mats using either 6.4 mm or 3.2 mm chopped nickel coated graphite fibers.

Initially the mats containing the 6.4 mm nickel coated graphite fibers were fabricated using the procedure whereby the fomulation given in Table 1 was added to a Waring commercial blender and blended for 3.5 minutes. Then the mixture was added to the headbox of the Noble and Wood 30 cm sheet machine containing 18 liters of deionized water. The mixture was stirred, drained and drum dried between blotters. At this point the mat had adequate strength to be handled and cut to smaller size without damage. By this particular procedure optimum results were not obtained because the mats had a non-uniform fiber distribution, surface regions of clumped fibers, and two distinctively different sides. Therefore, as a result, a modified process and formulation was utilized using shorter (3.2 mm) nickel coated graphite fibers. It is expected that such a modified process would also result in acceptable fiber mats utilizing the 6.4 mm fibers.

The formulation reported in Table 1 for the 3.2 mm nickel coated graphite (NCG) fibers was added to a Waring commerical blender and blended at the high speed setting for approximately five minutes. The contents were then added to the headbox of the Noble and Wood sheet machine which contained approximately 2 to 3 inches (5.1 to 7.6 cm) of deionized water. Next, the headbox was filled with deionized water to a total volume of approximately 18 liters. This provided some mixing of the acrylic fiber binder and the NCG fibers suspended in the water. The mixture was then stirred for approximately 30 seconds using a perforated brass plunger. After this mixing, the solids in the headbox were allowed to settle for approximately 2 to 3 minutes. Then, the mold was evacuated of deionized water until the water level reached approximately 5 cm above the fiber mat. A single sheet of 30 x 30 cm blotter paper was then carefully placed in the headbox on top of the water and allowed to become totally saturated with deionized water. The remaining water in the headbox was then evacuated causing the blotter to come in contact with the NCG fiber mat. This method eliminated any anomolies such as fiber clumps and wrinkles which were formed previously using the longer 6.4 mm NCG fibers. The NCG fiber mat was then liften from the screen at the bottom of the headbox and blotted dry with a series of fresh blotter papers until most of the excess water was removed. Finally, the mat was sandwiched between two large blotter papers and was placed into a steam heated drum drier which was set at approximately 210-214°F (99-101°C). The mat was dried in the drum dryer twice, each time changing the blotter papers. Any residual water was removed in a convection oven at 70°C for approximately 1 hour.

Mats having a uniform fiber distribution and no visible fiber bundles were obtained.

## TABLE 1

### Formulations Used for Preparing NCG Fiber Mats
### Containing 94 Weight Percent NCG Fibers
### And 6 Weight Percent Acrylic Fibers

|                                                           | 6.4 mm       | 3.2 mm       |
|-----------------------------------------------------------|--------------|--------------|
| Weight of NCG fiber (50 weight percent nickel coating)    | 10.2 g       | 11.6 g       |
| Vol. of acrylic pulp                                      | 145 ml [1]   | 120 ml [2]   |
| Superfloc® 204 [3] (0.25 weight percent solution)         | -----        | 2 ml         |
| Magnafloc® 1839A [4] (0.5 weight percent solution)        | 1.1 ml       | ------       |
| Deionized water                                           | 3,500 ml     | 3,000 ml     |
| Blending time                                             | 3.5 minutes  | 5 minutes    |

[1] - Density = 0.45 g/100 ml.
[2] - Density = 0.74 g/100 ml.
[3] - Brand of flocculant obtained from American Cyanamid Co.
[4] - Brand of flocculant obtained from American Cyanamid Co.

EXAMPLE 2

Preparation of Non-Woven Fiber Mats Utilizing Chopped Carbon Fibers

Non-woven fiber mats were prepared having a thickness of 0.064 cm using commercially available carbon fibers in the formulation given in Table 2. The mats were prepared in accordance with the procedure described in Example 1 except that the addition of the blotter paper to the headbox was not required for producing a sheet with two smooth sides. In addition, the amount of acrylic fiber binder required to provide adequate strength to the as-cast carbon fiber mats was increased to 10 weight percent with the mats containing 90 weight percent chopped carbon fibers. The term "as-cast" as used herein refers to the mats as formed, i.e., the mats have not been overplated. It was discovered that mats produced by this procedure contining less than 10 weight percent acrylic fiber binder were lacking in adequate material strength to handle without sustaining damage.

## TABLE 2

### Formulation Used For Preparing Carbon Fiber
### Mats Containing 90 Weight Percent Carbon Fibers and
### 10 Weight Percent Acrylic Fiber Binders

| | |
|---|---|
| Weight of carbon fiber (3.2 mm chopped) | 6.5 g |
| Vol. of acryiic pulp (Density = 0.74 g/100 ml) | 110 ml |
| Superfloc® 204[1] (0.25 weight percent solution) | 2 ml |
| Deionized water | 3,000 ml |
| Blending time | 5 min. |

1 - Brand of flocculent obtained from American Cyanamid Co.

### EXAMPLE 3

#### Overplating Process

Non-woven fiber mats prepared in accordance with the procedure of Example 1 from 3.2 mm fibers were overplated with nicke. A Watts nickel plating bath formulation was used to overplate the as-cast NCG fiber mats. The plating bath formulation utilized, per liter of plating bath, was about 568 ml of a standard commercial nickel sulfate solution (about 5 lbs/gal. of nickel sulfate), about 118 ml of a standard commercial nickel chloride solution (about 6 lbs/gal. of nickel chloride), about 29 g of boric acid, about 10 ml of a 7.5 g/L solution of saccharin, and about 0.3 g of sodium lauryl sulfate. The sodium lauryl sulfate was used to promote electrolyte wetting in the pores and resulted in a drop of surface tension to about 35 dynes/cm.

A flow-through-cell was utilized in the overplating process to plate nickel onto the fiber mats. Flow-through-cells are well known to those skilled in the art and any flow-through-cell which is capable of having the two anode configuration described heretofore may be utilized.

The flow-through-cell utilized was made of 7.6 cm O.D. acrylic tubing while the cathode holder was made of Teflon® brand of polymer. Two removable end plates contained provisions for pumping electrolyte into and out of the cell. The cathode holder (for holding the NCG fiber mat) was placed symmetrically betwen each anode. The anodes were held in place with cast acrylic rings. Electrical connections to each anode was made by spot welding a nickel wire (0.63 mm diameter) to one end of the circular anode (approximately 2 3/4 inches (7 cm) in diameter). Both sides of the cathode holder and each end plate contained neoprene rubber gaskets which provided a water-tight seal when the cell was clamped together with threaded rods. All areas where potential electrolyte leaks might occur (such as connecting wires to the anodes and cathode) were sealed with silicone RTV.

A cathode holder with a circular through hole geometry was made from TEFLON® brand of polyfluorocarbon. The dimension of the through hole in the cathode holder measured 2 inches (5 cm) in diameter (approximately 20 cm²). The cathode holder contained a 3.2 mm lip around the through hole in which a polypropylene insert and 5.7 cm diameter NCG fiber mat was placed. The insert provided a snug pressed fit into the Teflon® brand of polyfluorocarbon holder and rigidly held the NCG fiber mat in intimate contact with a 0.32 cm wide and 0.0125 cm thick nickel foil ring. The nickel foil, which had a 0.68 cm diameter nickel wire spot welded to it, provided electrical contact along the perimeter of the NCG fiber mat.

The as-cast NCG fiber mats were cut to the proper dimensions to fit the catholde holder. Circular specimens of the proper dimensions were punched out of the 30 cm square sheets using a 5.7 cm diameter arbor punch.

Initially, nickel 20 mesh screens were used as anodes but were dimensionally unstable as they were dissolved in the overplating operation. Expanded nickel sheets overplated with nickel using a Watts nickel bath and S-ROUNDS® brand of nickel rounds eliminated this problem and were therefore utilized in the overplating process.

The electrolyte was pumped using a Masterflex® brand of peristalticpump and 0.32 cm I.D. Tygon® brand of tubing. The pump was specially equipped with a switching relay which allowed the electrolyte flow direction to be reversed at regular intervals. The electrolyte flow direction change frequency was related to the total plating time utilized and was such that an equal number of flow direction changes occurred on each side of the NCG fiber mat. The flow direction was typically changed every 30 seconds for plating times of 5 minutes and longer while for plating times less than 5 minutes (or plating times which did not allow an even number of 30 second flow directions to take place on each side of the mat) a 10 second direction change was typically used. NCG mats which were DC plated were plated with a HP Model 6263 DC power supply.

Once a NCG mat was overplated in the flow-through cell, the mat was first thoroughly rinsed with 100 percent ethyl alcohol, ultrasonically cleaned for about 3 to about 5 minutes in a 50/50 mixture of deionized water and 100 percent ethyl alcohol, and finally rinsed again in deionized water. The mat was then blotten dry with paper towels to remove excess water and placed in a convection oven at 70°C for about 10 minutes to dry completely. Once the mat was completely dried, it was weighed to determine the amount of nickel deposited.

The currents used to plate the nickel were within the range of 609 mA to 10A; the flow direction was changed as stated above; and, the flow rate of the electrolyte was 28 ml/min. A graphic plot of the number of coulombs (ampere-seconds) versus the weight of nickel deposited, for a flow rate of 28 ml/min., for currents of 609 mA, 2.44 A, 6.09 A and 10 A, for 5.08 cm diameter NCG fiber mat demonstrates a linear relationship between the amount of nickel deposited and the number of coulombs used to plate the nickel. The results of such a determination are given in Table 3.

## TABLE 3
### Nickel Deposited Versus Coulombs of Charge

| Current (A) | Coulombs of Charge | Weight of Nickel Deposited (g)* | |
|---|---|---|---|
| 0.609 | 183 | 0.0451 | |
| 0.609 | 365 | 0.0993± 0.0038 | (4) |
| 0.609 | 731 | 0.2034± 0.0057 | (3) |
| 0.609 | 1,462 | 0.4184± 0.0068 | (4) |
| 0.609 | 2,192 | 0.6330± 0.0040 | (4) |
| 0.609 | 2,923 | 0.8461± 0.0064 | (2) |
| 2.44 | 732 | 0.2180± 0.0144 | (2) |
| 2.44 | 1,464 | 0.4492 | |
| 2.44 | 2,196 | 0.6607 | |
| 6.09 | 364 | 0.1063± 0.0012 | (3) |
| 6.09 | 731 | 0.2162± 0.0017 | (3) |
| 6.09 | 1,462 | 0.4354 | |
| 6.09 | 2,192 | 0.6438 | |
| 10.0 | 200 | 0.0595 | |
| 10.0 | 400 | 0.1200 | |
| 10.0 | 600 | 0.1784± 0.0016 | (4) |
| 10.0 | 750 | 0.2197± 0.0063 | (2) |
| 10.0 | 800 | 0.2393± 0.0014 | (5) |

* Number in parentheses denotes the number of individual samples weighed.

Thus, the coulombs of charge that is needed to deposit a desired quantity of nickel, as well as other metals, can readily be determined by this procedure.


EXAMPLE 4

Electrical Resistivity Measurements

The electrical resistivities of a number of overplated NCG and carbon fiber mats, produced by the procedure of Examples 1 and 2 respectively, plated with various amounts of nickel were measured using a four-point method known to those skilled in the art. The sample dimensions which were approximately 3/8 inches (0.95 cm) wide and 2 inches (5 cm) long were cut directly from the overplated 2 inch (5 cm) diameter disks. In order to provide good electrical contact during the measurements, the ends (approximately 0.5 cm) of each specimen were painted with conductive silver paint.

The test jig was made from two small screw-type hosecocks which were firmly affixed at a distance of approximately 4 cm apart. The two contact surfaces of each hosecock were mechanically polished to provide flat, parallel surfaces for stable electrical contacts. In addition, the contact surfaces of the test jig were lined with copper foil which provided both additional electrical conductivity at the specimen ends and leads for applying the DC currents.

Various currents were applied along the sample's long axis using a PAR (Princeton Applied Research) Model 273 Potentiostat/Galvanostat. The resulting voltages were measured along the long axis of the mat using two test tip probes which were firmly affixed and separated 2 cm apart.

The results are reported in Tables 4 and 5. In addition to the resistivity values, the calculated nickel coating thickness for each weight of nickel deposited is given.

TABLE 4

Weight of Nickel Deposited/Unit Area Versus Resistivity For Nickel Coated Graphite Fiber Mats

| Average Weight of Nickel Deposited ($g/m^2$) | Calculated Nickel Coating Thickness (microns) | Average Resistivity* (ohm-cm) |
|---|---|---|
| -0- | 0.350 | $633.8 \times 10^{-4} \pm 9.2 \times 10^{-3}$ |
| 47.9 | 0.595 | $32.4 \times 10^{-4} \pm 7.1 \times 10^{-5}$ |
| 103.3 | 0.826 | $22.0 \times 10^{-4} \pm 2.7 \times 10^{-4}$ |
| 206.4 | 1.28 | $11.9 \times 10^{-4} \pm 8.5 \times 10^{-5}$ |
| 317.7 | 1.71 | $7.4 \times 10^{-4} \pm 6.0 \times 10^{-5}$ |
| 420.1 | 2.10 | $6.2 \times 10^{-4} \pm 3.5 \times 10^{-5}$ |

* Each value is the average of at least three separate measurements made on three different samples.

## TABLE 5

### Weight of Nickel Deposited/Unit Area Versus

### Resistivity For Carbon Fiber Mats

| Average Weight of Nickel Deposited ($g/m^2$) | Calculated Nickel Coating Thickness (microns) | Average Resistivity* (ohm-cm) |
|---|---|---|
| -0- | -0- | $1,118.5 \times 10^{-4} \pm 1.5 \times 10^{-2}$ |
| 25.5 | 0.121 | $226.0 \times 10^{-4} \pm 1.4 \times 10^{-3}$ |
| 51.6 | 0.238 | $116.4 \times 10^{-4} \pm 7.1 \times 10^{-4}$ |
| 105.2 | 0.483 | $41.0 \times 10^{-4} \pm 8.4 \times 10^{-4}$ |
| 212.4 | 0.934 | $17.3 \times 10^{-4} \pm 2.7 \times 10^{-5}$ |
| 566.9 | 2.16 | $4.6 \times 10^{-4} \pm 3.4 \times 10^{-5}$ |

\* Each value is the average of at least three separate measurements made on three different samples.

The data indicate that even lightly overplating the NCG fiber mat increases the electrical conductivity of the mat by a factor of about 20 while additional overplating does not make the mat significantly more conductive.

EXAMPLE 5

Mercury Porosimetry

Mercury porosimetry and mercury pycnometry were used to determine the porosity characteristics of a number of 5.08 cm diameter overplated NCG mats made in accordance with the procedure of Example 1. The mats were overplated in accordance with the procedure of Example 3 using two different DC currents, namely 609 mA and 6.09 A. The deposition times, and thus the total charge passed, were varied in order to achieve the desired weights of overplated nickel. From microscopic evaluations of overplated NCG fiber mats, it was determined that using the range of current levels specified in Example 3 produced a uniformly distributed nickel deposit. In addition, several 5.08 diameter as-cast i.e., not overplated, NCG fiber mats were evaluated using mercury porosimetry and mercury pycnometry.

The analysis performed on each mat included pore volume determination, pore size distribution, and bulk density. The tests were conducted in accordance with well-known procedures for mercury porosimetry and mercury pycnometry. The results are given in Table 6.

## TABLE 6

### Mercury Porosimetry Data For NCG Fiber Mats

| Coulombs of Charge | Weight of Nickel Deposited (g) | Measured Porosity | Median Pore Diameter (microns) | Bulk Density $(g/cm^3)$ |
|---|---|---|---|---|
| 0 | 0 | 92.5 | 47 | 0.157 |
| 0 | 0 | 95.4 | 41 | 0.168 |
| 183 | 0.051 | 93.6 | 41 | 0.199 |
| 365 | 0.098 | 94.3 | 42 | 0.218 |
| 731 | 0.207 | 96.1 | 45 | 0.260 |
| 731 | 0.199 | 93.5 | 46 | 0.286 |
| 1,462 | 0.418 | 92.2 | 48 | 0.384 |
| 1,462 | 0.424 | 92.5 | 46 | 0.417 |
| 2,192 | 0.627 | 85.7 | 47 | 0.471 |
| 2,192 | 0.635 | 92.2 | 48 | 0.467 |
| 2,192 | 0.642 | 91.1 | 41 | 0.546 |

0 264 771

The data indicate that the porosity of the mats is primarily determined by the mat making process and not significantly changed by these particular plating conditions. In general, the pore size distribution for both as-cast and overplated mats demonstrated sharp, well-defined peaks at only one particular pore size. The median pore diameters for the as-cast and overplated mats ranged from 41 microns to 48 microns. Again, it appears that the median pore diameter is determined by the mat making process and is not significantly affected by overplating under these conditions. The median pore diameter for each of the mats tested averaged about 45 microns.

Unlike the porosity and median pore diameter, the bulk density of the NCG mats showed a good linear dependency with the amount of charge passed.

In comparison, the sintered nickel structure made from two commercially available nickel powders, INCO® brand of nickel powder, Type 287 and Type 255, have a reported density of 0.75 to 0.95 and 0.50 to 0.65 g/cc, respectively (see "Sintering Data for Inco Nickel Powders Type 255 and Type 287," The International Nickel Company, Inc., New York, NY, Copyright 1979).

## EXAMPLE 6

### Deposition of Metals Directly Onto Carbon Fiber Mats

Nickel, copper, zinc, and silver were deposited (overcoated) directly onto carbon fiber mats containing 90 weight percent carbon fiber and 10 weight percent acrylic fiber binder, with the percentages being based on the total weight of the carbon fiber and binder. The carbon fiber mats were prepared by the procedure given in Example 2. The flow-through-cell fitted with the circular cathode holder previously described was used.

The carbon fiber mats have a higher ohmic resistance than similar NCG mats because they contain more acrylic binder (10 weight percent) and do not have a metallic coating. As a result, it is more difficult to plate carbon fiber mats uniformly with metals. Typically, the electrodeposit begins to nucleate and grow preferentially near the electrical contact to the carbon fiber mat due to its appreciable internal resistance. At plating currents normally used to deposit nickel onto NCG fiber mats (as described in Example 3), both silver and copper electrodeposits first nucleated and grew along the circumference of the 5.08 cm diameter carbon fiber mat, i.e. closest to the electrical contact ring. This problem was partially overcome by first plating the carbon fiber mats as much lower applied current (or lower current density). This technique of using a lower current density to provide more nuclei over the entire substrate is referred to as a strike and is often used as a preparatory technique for difficult-to-plate surfaces. Once the surface of the carbon fiber mat was treated with a strike, higher current levels could be used. This problem did not exist for electrodepositing nickel or zinc onto carbon fiber mats.

In addition to using a strike, other techniques such as anodizing and pre-soaking in solutions with wetting agents were needed to produce a metal coated carbon fiber mat with a uniform metal deposit. Not all the metals studied nucleated and grew uniformly on the carbon fiber mats. This problem was unique for each metal plated and not all the techniques attempted proved successful.

Those skilled in the art can appreciate that different metals may perform differently in the overplating process. Thus, procedures such as strike and other techniques such as anodizing and pre-soaking in solutions with wetting agents may not yield the same optimum uniform result for all metals. However, those skilled in the art can determine which procedure will yield optimum results without undue experimentation.

Unless otherwise noted, the electrolyte flow rate was 19 ml/min. (producing more than 16 volume changes per minute within the mat pores) while the flow direction was changed every 30 seconds. Nickel was electrodeposited directly onto carbon fiber mats using a Watts nickel plating solution which contained 0.3 g/L sodium lauryl sulfate. The anodes were expanded nickel sheets overplated with nickel using a Watts nickel bath and S-ROUNDS® brand of nickel rounds. Initially, nickel was deposited onto carbon fiber mats by applying lower currents (200 mA and 300 mA) for approximately 10 to 20 minutes and then finally stepping the current to 609 mA to deposit the desired quantity of nickel. These plating conditions resulted in a very smooth, well distributed deposit with all the carbon fibers being uniformly coated with nickel. Later, carbon fiber mats were plated directly with nickel by applying a constant current of 2.44 A. Plating times varied from 1.25 minutes to 30 minutes depending on the amount of nickel that was desired. In all cases, the nickel deposit was smooth, uniformly coated the individual fibers, and was well distributed throughout the entire mat. For all the currents used (which ranged from 200 mA to 2.44 A) no pretreatment of the carbon fiber mat was required to obtain a smooth, uniformly distributed nickel deposit.

Copper was deposited onto carbon fiber mats using a commercially available pyrophosphate copper plating process (M and T Chemicals, Inc.). Copper foil (0.050 mm thick) with perforated holes ranging from 0.2 mm to 0.5 mm in diameter served as anodes. Initially attempts to plate copper directly onto the carbon fiber mats even at low applied currents i.e. currents of 100, 200 and 300 mA resulted in deposits which were highly nonuniform. In all cases, the copper preferentially deposited near the region of the electrical contact while the center of the mat remained essentially unplated. As a result, several pretreatment procedures were used in an attempt to obtain a well distributed, uniform deposit. It was found that by pre-anodizing the carbon fiber mats in a 1N sulfuric acid solution containing a small quantity of sodium lauryl sulfate (approximately 0.1 to 0.3 g/L) and then electroplating the mat with copper resulted in a highly uniform, well distributed deposit. Typically, each face of the carbon fiber mat was anodized at a current of 1A for approximately 2 minutes while a platinum foil served as a counter electrode. Once the mats were anodized under these conditions, they were first plated at lower currents (usually 100 or 200 mA for 20 to 30 minutes) following by an increase in the current to 609 mA until the desired amount of copper was deposited. In comparison, carbon fiber mats were also anodized under the same conditions in a solution containing 10 weight percent potassium hydroxide and sodium lauryl sulfate, and plated with copper as previously described. This comparative treatment resulted in a mat which had a highly nonuniform deposit.

Zinc was electrodeposited onto carbon fiber mats using a zinc plated solution obtained from Electrochemicals (Electro-Brite NAZ-32C). The anodes made of high purity zinc foil (m3N, Alfa Products, 0.25 mm thick), were perforated with holes ranging in size from about 0.5 mm to 2.0 mm to allow electrolyte flow. Plating zinc directly onto carbon fiber mats without using any pretreatments resulted in poorly distributed, nonuniform deposits. This occurred for applied currents ranging from 200 mA to 609 mA. In addition, pre-anodizing the mats (in a 1N sulfuric acid solution containing sodium lauryl sulfate) under the same conditions used to successfully deposit copper, resulted in an extremely poor, nonuniform zinc deposit. The best zinc deposits for this example were obtained by first pre-soaking the carbon fiber mat (for approximately 2 to 3 minutes) in deionized water containing approximately 0.1 to 0.3 g/L sodium lauryl sulfate, flowing the electrolyte through the mat several times prior to plating, and plating the mat using a flow rate of approximately 37 ml/min. A current of 609 mA was first applied for 10 minutes followed by an increase of the current to 2.44 A until the desired amount of zinc was deposited. Duplicating these conditions but lowering the electrolyte flow rate to 19 ml/min. resulted in a slightly poorer, spotty deposit.

Finally, silver was electrodeposited onto carbon fiber mats using the following brush plating processes obtained from LDC (Liquid Development Company, Inc., Cleveland, Ohio): silver brush plating (4701), silver strike (4702), and silver brush plating (47T2). For each plating process, pure silver mesh (0.1 mm wire diameter) screen served as anodes. For each plating process, pretreatments (such as those described previously) applied to the carbon fiber mats resulted in silver deposits with poor uniformity and distribution. It was found that the best method obtained for this example for depositing silver directly onto the mat (for each plating process) was to use a low current (100 to 200 mA) throughout the entire plating cycle with no pretreatments. Using this technique, relatively good through plating was obtained using the 4701 plating process while slightly poorer through plating but relatively good surface plating was obtained with the 4702 strike plating bath. Under similar plating conditions, the 47T2 plating process resulted in only a marginal silver deposit which has a relatively nonuniform distribution.

EXAMPLE 7

Overplating Electrical Tabs For Electrode Leads

Overplated 5.08 cm diameter NCG fiber mats produced in accordance with the procedure of Example 1 and used for electrochemical impregnation and cycle testing were provided with tabs for making electrical connections. The tabs were prepared by heavily overplating nickel onto a 3/16 inch (0.48 cm) to 1/4 inch (0.64 cm) edge of the mat in a Watts nickel plating solution containing 0.3 g/L sodium lauryl sulfate. The solution was heated to approximately 60°C and mildly agitated using a mechanical stirer. A single titanium anode basket containing S-ROUNDS® brand of nickel rounds was used as the anode. The tab area was plated at a current of about 700 mA for about 3 minutes on each side.

Prior to overplating the tab, the entire mat was presoaked in a solution containing deionized water and sodium lauryl sulfate. A strong, rigid electrical tab highly re enforced with nickel is obtained in this manner (see, for example, the procedure disclosed in U.S. 4,439,281 issued March 27, 1984).

## EXAMPLE 8

A nickel coated graphite fiber electrode was impregnated with about 1.3 grams of $Ni(OH)_2$ active mass using conventional electrochemical precipitation. A secondary impregnation with cobalt hydroxide was carried out using the procedure given by W. Lee, J. Electrochem. Soc. 132, pp. 2835-2838, December, 1985. This postimpregnation is reported to produce quick activation of nickel electrodes. After formation, the electrode was cycled 18 times, discharging on each cycle at the C/10 rate, i.e., a rate at which a 10 hour discharge would correspond to 100% utilization of the active material in the electrode. On cycles 16-18, the actual discharge time was 9.0 hours, corresponding to 90% active mass utilization. The electrode's volumetric energy density was $0.254$ A hr/cm³ and its gravimetric energy density was $0.186$ A hr/g. The gravimetric energy density was substantially higher than the $0.11$ A hr/g obtained from commercial sintered nickel powder electrodes (A. Lee, W. Ferrando and F. Flight, "Electrochemical Impregnation of Nickel Composite Electrodes," Naval Surface Weapons Center report No. NSWC TR 82-414, 1 August 1982). The volumetric energy density was modest due to the relatively low active mass loading used.

## EXAMPLE 9

A 91.5 percent porous nickel coated graphite fiber electrode was electrochemically impregnated with 2.15 grams of nickel hydroxide. This produced a loading of 1.8 grams of $Ni(OH)_2$ per cubic centimeter of void volume in the electrode pores. The electrode was cycled 18 times with a C/10 discharge rate. On the 18th cycle, the actual discharge time was 8.75 hours, corresponding to an active mass utilization of 87.5%. The volumetric energy density of the electrode was $0.415$ A hr/cm³, and the gravimetric energy density was $0.227$ A hr/g.

## EXAMPLE 10

A nickel coated graphite electrode was electrochemically impregnated with 1.16 grams of active mass per cubic centimeter at void volume. The impregnation included the cobalt hydroxide post treatment as described in Example 8. After 5 cycles with the C/10 discharge rate, the active mass utilization of the electrode was 89%. The electrode was then recharged and discharge at the C/4 rate. The active mass utilization was 85%. The volumetric energy density was $0.254$ A hr/cm³ and the gravimetric energy density was $0.179$ A hr/g.

**Claims**

1. A non-woven fiber mat having a multiplicity of pores which extend continuously from one surface of said mat to the other surface comprising:

(A) A multiplicity of electrocoatable fibers overlaid and intersecting substantially within the same two dimensional plane;

(B) A fibrillated binder in a structurally supportive amount dispersed within said mat wherein said binder fibrils contact said electrocoatable fibers; and

(C) A substantially uniform metallic overcoat covering said electrocoatable fibers and at least partially incorporating within said overcoat said binder at the sites where said binder contacts said electrocoatable fibers.

2. The mat of Claim 1 wherein the majority of said fibrils of (B) contact said electrocoatable fibers substantially in dimensional planes angular to said two dimensional plane of (A).

3. The mat of Claim 1 wherein said electrocoatable fibers are randomly overlaid and randomly intersecting.

4. The mat of Claim 1 wherein said fibrils contact said electrocoatable fibers by wrapping around said electrocoatable fibers.

5. The mat of Claim 1 wherein said electrocoatable fibers are selected from the group consisting of:

(a) metal coated electrically conductive fibers;

(b) electrically conductive fibers;

(c) metal coated non-conductive fibers; and

(d) mixtures thereof.

6. The mat of Claim 5 wherein said metal of said metal ccated fibers of (a) and (c) is selected from the group consisting of: nickel, iron, cobalt, platinum, gold, silver, copper, palladium, aluminum, lead, zinc, tim, chromium, cadmium, ruthenium, and alloys comprising at least one metal thereof as a main component; wherein said electrically conductive fibers of (a) and (b) are selected from the group consisting of: carbon fibers, graphite fibers, activated carbon fibers, pitch-based graphite fibers, intercalated graphite fibers, boron, silicon carbide, and mixtures thereof; and wherein said non-conductive fibers of (c) are selected from the group of fibers consisting of: polyesters, polyolefins, acrylics, polyamides, copolymers thereof, glass, ceramic and mixtures thereof.

7. The mat of Claim 6 wherein said metal is nickel.

8. The mat of Claim 5 wherein said metal coated electrically conductive fibers are nickel coated carbon fibers or nickel coated graphite fibers; wherein said electrically conductive fibers are carbon fibers or graphite fibers; wherein said non-conductive fibers are acrylic fibers; and wherein said binder is selected from the group of fibers consisting of: acrylics, polyfluorocarbons, copolymers thereof and mixtures thereof.

9. The mat of Claim 8 wherein said binder is acrylic fibers.

10. The mat of Claim 1 wherein said electrocoatable fibers are present in an amount of about 80 to about 98 weight percent and said binder is present in an amount of about 2 to about 20 weight percent, said weight percents being based on the total weight of said electrocoatable fibers and said binder.

11. The mat of Claim 1 wherein said electrocoatable fibers are present in an amount of about 88 to about 96 weight percent and said binder is present in an amount of about 4 to about 12 weight percent, said weight percents being based on the total weight of said electrocoatable fibers and said binder.

12. The mat of Claim 1 wherein said electrocoatable fibers have lengths up to about 7mm.

13. The mat of Claim 1 wherein said electrocoatable fibers have lengths within the range of about 0.5 mm to about 7 mm.

14. The mat of Claim 1 wherein said electrocoatable fibers have diameters within the range of about 3 microns to about 15 microns.

15. The mat of Claim 1 wherein said binder fibrils have diameters up to about 5 microns.

16. The mat of Claim 1 wherein said metallic overcoat is up to about 3 microns thick.

17. The mat of Claim 1 wherein the metal of said metallic overcoat is selected from the group consisting of: nickel, iron, cobalt, platinum, gold, silver, copper, palladium, aluminum, lead, zinc, tin, chromium, cadmium, ruthenium, and alloys comprising at least one metal thereof as a main component.

18. The mat of Claim 1 wherein:
said electrocoatable fibers are randomly overlaid and randomly intersecting; have lengths within the range of about 0.5 mm to about 7 mm; are selected from the group consisting of metal coated electrically conductive carbon or graphite fibers; electrically conductive carbon or graphite fibers; metal coated non-conductive acrylic fibers, and mixtures thereof; have diameters within the range of about 3 microns to about 15 microns; and are present in an amount of about 88 to about 96 weight percent, based on the total weight of said electrocoatable fibers and said binder;
said binder is selected from the group consisting of acrylic fibers, polyfluorocarbons and mixtures thereof; the majority of the fibrils of said binder contact said electrocoatable fibers substantially in dimensional planes angular to said two dimensional plane of said electrocoatable fibers; the diameter of said fibrils is up to about 5 microns; and said binder is present in an amount of about 4 to about 12 weight percent, based on the total weight of said electrocoatable fibers and said binder;
said metallic overcoat is up to about 3 microns thick with said overcoat at least partially incorporating within said overcoat said binder at the sites where said binder contacts said electrocoatable fibers; and
said metal of said metal coated fibers and of said metallic overcoat, is selected from the group consisting of: nickel, iron, cobalt, platinum, gold, silver, copper, palladium, aluminum, lead, zinc, tin, chromium, cadmium, ruthenium, and alloys comprising at least one metal thereof as a main component.

19. The mat of Claim 18 wherein said electrocoatable fibers are nickel coated carbon or graphite fibers present in an amount of about 94 weight percent and said binder is present in an amount of about 6 weight percent, said weight percents being based on the total weight of said electrocoatable fibers and said binder, and said overcoat is nickel; or said electrocoatable fibers are carbon or graphite fibers present in an amount of about 90 weight percent and said binder is present in an amount of about 10 weight percent, said weight percents being based on the total weight of said electrocoatable fibers and said binder; and said binder is a copolymer of at least about 89% by weight acrylonitrile and up to about 11% by weight methyl methacrylate.

20. A method of producing a non-woven fiber mat of Claim 1 comprising:
(I) intimately admixing said electrocoatable fibers of (A) and said fibrillated binder of (B) with a suspending liquid and a flocculating agent until a substantially uniform well dispersed mixture is obtained;

(II) adding said mixture of (I) to a suitable container having a support structure and outlets for controlling removal of said suspending liquid, said container having added thereto a minor amount of said suspending liquid before the addition of said mixture of (I);

(III) adding additional suspending liquid whereby substantially all the volume of said container has been filled;

(IV) stirring the mixture in said container;

(V) allowing said mixture of (IV) to settle;

(VI) removing a substantial amount of said suspending liquid whereby a minor amount of suspending liquid remains above the formed mat sufficient to allow the addition of at least one sheet of absorbing and/or porous material to be placed in the remaining suspending liquid without adversely disturbing the formed mat;

(VII) adding at least one sheet of absorbing and/or porous material to said remaining suspending liquid;

(VIII) removing said remaining suspending liquid thereby causing said absorbing and/or porous material to make contact with the surface of said mat;

(IX) removing said mat from said container;

(X) placing said mat in a drum dryer, optionally between sheets of absorbing and/or porous material;

(XI) optionally, repeating (X) wherein the absorbing and/or porous material is changed;

(XII) optionally, drying said mat in a convection oven;

(XIII) optionally, treating said mat with a wetting solution;

(XIV) placing said mat in an electrolyte solution, optionally having a wetting solution added thereto, at the cathode position substantially symmetrically between two anodes comprising the metal to be deposited or two insoluble anodes;

(XV) applying a current; and

(XVI) providing bulk electrolyte solution to both sides of said mat.

21. The method of Claim 20 wherein said suspending liquid is deionized water; said mixture of (V) is allowed to gravity settle; said wetting solution of (XIV) is present in said electrolyte solution; and the direction of flow of the electrolyte solution is periodically reversed.

22. The method of Claim 20 wherein said mat of (XIII) is treated with a wetting solution.

23. The method of Claim 21 wherein said drum dryer of (X) is a steam heated drum dryer and said mat is thereafter dried in a convection oven.

24. The method of Claim 23 wherein said heated drum dryer is at a temperature of about 99°C to about 101°C and said convection oven is at a temperature of about 70°C.

25. The method of Claim 22 wherein said suspending liquid is deionized water; the mixture of (V) is allowed to gravity settle; and the direction of flow of the electrolyte solution is periodically reversed.

26. A method of overplating a uniformly metallic coating on a non-woven fiber mat comprising:

(I) optionally, treating said mat with a wetting solution;

(II) placing said mat in an electrolyte solution, optionally having a wetting solution added thereto, at the cathode position substantially symmetrically between two anodes comprising the metal to be deposited or two insoluble anodes;

(III) applying a current; and

(IV) proving bulk electrolyte solution to both sides of said mat.

27. The method of Claim 26 wherein said mat of (I) is treated with a wetting solution, and the direction of flow of electrolyte solution is periodically reversed.

28. The method of Claim 26 wherein said wetting agent is present in said electrolyte solution, and the direction of flow of electrolyte solution is periodically reversed.

29. A battery electrode comprising a non-woven fiber mat of Claim 1.

30. A battery comprising at least one battery electrode of Claim 29.